# EUROPÄISCHE PATENTSCHRIFT

(11) **EP 2 837 917 B1**
(45) Veröffentlichungstag und Bekanntmachung des Hinweises auf die Patenterteilung: **11.01.2017**
(21) Anmeldenummer: 14450039.4
(22) Anmeldetag: 29.07.2014
(51) Int. Cl.: G01F 1/66, G01F 1/74, B65G 53/66, G01F 1/60, G01F 1/64

(54) **Verfahren und Vorrichtung zum Überwachen des Transports von festem rieselfähigem Heizmaterial, wie beispielsweise Holzschnitzel oder Pellets**
Method and device for monitoring the transport of solid pourable heating material, such as wood chips or pellets
Procédé et dispositif destinés à surveiller le transport de matériau chaud solide pouvant s'écouler, comme des copeaux de bois ou des granulés

(30) Priorität: 14.08.2013 AT 6432013
(43) Veröffentlichungstag der Anmeldung: 18.02.2015
(73) Patentinhaber: GEOPLAST Kunststofftechnik Ges.m.b.H., 2604 Theresienfeld (AT)
(72) Erfinder: Hädrich, Peter, 1160 Wien (AT); Schöls, Friedrich, 2601 Eggendorf (AT)
(74) Vertreter: Miksovsky, Alexander

(56) Entgegenhaltungen:
- EP-A1- 2 592 026
- WO-A1-81/00914
- DE-A1-102009 009 426
- FR-A1- 2 780 500

## Beschreibung

Die vorliegende Erfindung bezieht sich auf ein Verfahren zum Überwachen des Transports von festem rieselfähigem Heizmaterial, wie beispielsweise Holzschnitzel oder Pellets, wobei das Heizmaterial aus einem Vorratsbehälter über wenigstens eine Entnahmevorrichtung in eine Ausbringleitung, insbesondere Saugleitung eingebracht und zu einer Heizvorrichtung bzw. einem Zwischenbehälter der Heizvorrichtung transportiert wird, wobei in der Ausbringleitung über wenigstens einen Sensor der Durchfluss und/oder die Durchflussmenge des transportierten Heizmaterials detektiert wird bzw. werden.

Die vorliegende Erfindung bezieht sich darüber hinaus auf eine Vorrichtung zum Überwachen des Transports von festem rieselfähigem Heizmaterial, wie beispielsweise Holzschnitzel oder Pellets, mit einem Vorratsbehälter für das Heizmaterial, wenigstens einer Entnahmevorrichtung zur Entnahme des zu transportierenden Heizmaterials aus dem Vorratsbehälter und einer Ausbringleitung, insbesondere Saugleitung zum Transport des Heizmaterials von dem Vorratsbehälter zu einer Heizvorrichtung bzw. einem Zwischenbehälter der Heizvorrichtung, wobei in bzw. an der Ausbringleitung wenigstens ein Sensor angeordnet ist und dass der Sensor für eine Detektion des Durchflusses und/oder der Durchflussmenge des transportierten Heizmaterials mit einer Auswerteeinrichtung gekoppelt ist.

Im Zusammenhang mit Heizanlagen, welche mit festem, rieselfähigem Heizmaterial betrieben werden, ist es beispielsweise bekannt, neben der Heizanlage einen Vorratsraum bzw. Vorratsbehälter vorzusehen, in welchem derartiges Heizmaterial, beispielsweise Holzschnitzel oder Pellets aus Holz, gesammelt wird. Die Zufuhr des Heizmaterials zu der Heizanlage bzw. einem Kessel einer derartigen Heizanlage erfolgt beispielsweise über eine Saugleitung, wie dies unter anderem der AT-U 3734, der AT-B 405 875, der EP-A 1 052 456 oder der EP-B 1 426 684 zu entnehmen ist. Nachteilig bei diesen bekannten Heizanlagen ist insbesondere die Tatsache, dass beispielsweise in einem Keller ein getrennter Raum für die Aufbewahrung bzw. Aufnahme des Heizmaterials vorzusehen ist und dass mit derartigen Saugleitungen ein ordnungsgemäßes Dosieren des Heizmaterials nicht ohne weiteres möglich ist.

Ein Verfahren sowie eine Vorrichtung der eingangs genannten Art sind beispielsweise der FR 2 780 500 A1 zu entnehmen, wobei ein akustischer Sensor zur Feststellung der Durchtrittsmenge eines pulverförmigen oder körnigen Materials in einer pneumatischen Leitung vorgesehen ist.

Aus der DE 10 2009 009426 A1 sind ein Verfahren und eine Vorrichtung zur Bestimmung von Eigenschaften eines mit Partikeln beladenen Fluidstroms zu entnehmen.

Aus der WO 81/00914 A1 ist eine Vorrichtung zur Detektion von Staub oder anderen Partikeln in einem Gasstrom bekannt.

Weiters ist aus der EP 2 592 026 A1 eine Saugförderanlage mit einer Umschalteinheit bekannt.

Darüber hinaus ist es bekannt, aus derartigen Vorratslagern über üblicherweise eine große Länge aufweisenden Schnecken das Heizmaterial aus einem Vorratsraum zu einer Heizanlage bzw. zu einem Zwischenbehälter einer derartigen Heizanlage zu transportieren. Nachteilig bei derartigen Ausführungsformen ist die Tatsache, dass sich derartige Schneckenförderanlagen zumeist über eine sehr große Länge erstrecken, wodurch ein überaus großer mechanischer Aufwand für derartige Schneckenförderanlagen erforderlich ist.

Darüber hinaus ist es bekannt, einen Zwischenbehälter vorzusehen, welcher für eine Aufnahme einer geringen Menge des Heizmaterials dient und der Heizvorrichtung vorgeschaltet wird, wobei das Heizmaterial in derartige Zwischenbehälter wiederum über eine Saugleitung eingebracht wird, wobei mit derartigen Saugförderanlagen die oben bereits erwähnten Nachteile verbunden sind.

Darüber hinaus werden derartige Heizanlagen bzw. Heizvorrichtungen zunehmend weitestgehend automatisiert betrieben, so dass insbesondere über längere Zeiträume für einen sicheren Transport des Heizmaterials von dem Vorratsbehälter zu der Heizvorrichtung bzw. zu dem der Heizvorrichtung unmittelbar vorgeschalteten Zwischenbehälter, in welchem beispielsweise etwa ein durchschnittlicher Tagesbedarf für den Betrieb der Heizvorrichtung zwischengelagert wird, gesorgt werden muss. Im Zusammenhang mit dem rieselfähigen festen Heizmaterial kann beispielsweise in Teilbereichen desselben ein Eindringen von Feuchtigkeit oder dgl. zu Verklumpungen führen, welche einen ordnungsgemäßen Transport durch die Ausbringleitung erschweren oder blockieren, so dass für einen derart gewünschten automatisierten Betrieb eine zuverlässige Überwachung einer Bereitstellung von ausreichendem Heizmaterial für die Heizvorrichtung zur Verfügung gestellt werden muss.

Die Erfindung zielt daher darauf ab, im Zusammenhang mit einem Verfahren sowie einer Vorrichtung der eingangs genannten Art bei einem Betrieb einer Heizvorrichtung, welche mit festem rieselfähigem Heizmaterial, wie beispielsweise Holzschnitzel oder Pellets gespeist wird, die oben genannten Nachteile zu vermeiden und insbesondere eine einfache und zuverlässige Überwachung des Transports des Heizmaterials aus einem Vorratsbehälter zu der Heizvorrichtung bzw. zu einem der Heizvorrichtung vorgeschalteten Zwischenbehälter zur Verfügung zu stellen.

Zur Lösung dieser Aufgaben ist ein Verfahren der eingangs genannten Art im Wesentlichen dadurch gekennzeichnet, dass eine elektrostatische Aufladung des transportierten, von Holzschnitzel oder Pellets gebildeten Heizmaterials während des Transports durch die Ausbringleitung durch einen Aufprall des Heizmaterials auf die aus einem Kunststoff hergestellte, innere Oberfläche der Ausbringleitung durch eine Detektion einer Entladung des aufgeladenen transportierten Heizmaterials an einem durch leitende Flächen an der Innenseite der Ausbringleitung gebildeten Sensor festgestellt wird. Da in der Ausbringleitung über wenigstens einen Sensor der Durchfluss und/oder die Durchflussmenge des transportierten Heizmaterials detektiert wird bzw. werden, wird sichergestellt, dass bei einer entsprechenden Automatisierung der gesamten Heizanlage der zuverlässige Transport des festen rieselfähigen Heizmaterials zu der Heizvorrichtung zur Verfügung gestellt wird. Dies ist insbesondere wichtig, falls das feste rieselfähige Heizmaterial in entsprechender Dosierung unmittelbar der Heizvorrichtung bereitgestellt wird. Eine erfindungsgemäß vorgesehene derartige elektrostatische Aufladung des zu transportierenden, von Holzschnitzel oder Pellets gebildeten Heizmaterials ergibt sich bei einem Transport des festen rieselfähigen Materials bei einer Berührung mit der Oberfläche der Ausbringleitung, welche üblicherweise aus einem Kunststoff hergestellt ist. Bei einer weiteren Berührung des durch einen Kontakt mit der Innenwand der Ausbringleitung elektrostatisch aufgeladenen zu transportierenden festen rieselfähigen Heizmaterials mit wenigstens einer leitenden Fläche an der Innenseite der Ausbringleitung findet eine Entladung statt, so dass in weiterer Folge eine sich durch derartige Entladungen an der leitenden Fläche bzw. Elektrode an der Innenseite der Ausbringleitung ansammelnde Oberflächenladung abgeführt und mit geeigneten Messverfahren detektiert werden kann. Eine erfindungsgemäße Überwachung zur Unterstützung der Automatisierung einer derartigen Heizanlage ist für einen störungsfreien Betrieb auch bei Einsatz eines entsprechenden Zwischenbehälters wichtig, in welchem beispielsweise ein durchschnittlicher Tagesbedarf an Heizmaterial zwischengelagert wird, aus welchem in entsprechender, üblicherweise gering dosierter Rate das Heizmaterial in weiterer Folge der Heizvorrichtung zugeführt wird.

In diesem Zusammenhang wird gemäß einer bevorzugten Ausführungsform vorgeschlagen, dass durch das elektrostatisch aufgeladene transportierte Heizmaterial bei einem Auftreffen auf die Oberfläche der Elektrode abgegebene Ladungen über wenigstens eine mit dem Sensor gekoppelte Diode abgeleitet werden und die Spannung der Diode zur Feststellung des Durchflusses und/oder einer Durchflussmenge des transportierten Heizmaterials in einer nachgeschalteten Auswerteeinrichtung ausgewertet wird. Eine derartige nachgeschaltete Diode ermöglicht eine einfache und zuverlässige Abfuhr der sich auf der Elektrode sammelnden Oberflächenladungen sowie eine einfache und zuverlässige Auswertung des Durchflusses und/oder der Durchflussmenge des transportierten Heizmaterials in einer nachgeschalteten Auswerteeinrichtung.

Gemäß einer besonders bevorzugten Ausführungsform wird ergänzend vorgeschlagen, dass zur Auswertung des Durchflusses oder der Durchflussmenge des transportierten Heizmaterials der spannungsabhängige Wert der Sperrschichtkapazität der wenigstens einen Diode ausgewertet wird. Durch eine Auswertung des spannungsabhängigen Werts der Sperrschichtkapazität wird beispielsweise sichergestellt, dass die Durchlassspannung der Diode in Durchlass- und Sperrrichtungen herangezogen wird und als Differenz der Spannungen auch in nachgeschalteten Kondensatoren gespeicherten Ladungen ausgewertet wird.

Der Vorteil der Auswertung der elektrostatischen Aufladung des transportierten Heizmaterials liegt auch darin, dass zur Auswertung der elektrostatischen Aufladung eine galvanische Verbindung zwischen den Sensorelementen und einer Messsignalauswertung nicht erforderlich ist, während bei den weiters genannten Verfahren zumindest überwiegend eine galvanisch leitende Verbindung erforderlich ist.

Eine einfache und zuverlässige Feststellung des Durchflusses des transportierten Heizmaterials durch die Ausbringleitung lässt sich dadurch erzielen, dass ein Durchfluss des transportierten Heizmaterials durch die Ausbringleitung durch Feststellung einer Änderung eines durch den wenigstens einen Sensor festgestellten Messwerts gegenüber einem Soll-Messwert detektiert wird, welcher bei einem Durchtritt von lediglich einem Saugmedium durch die Ausbringleitung festgestellt wird, wie dies einer weiters bevorzugten Ausführungsform des erfindungsgemäßen Verfahrens entspricht.

Darüber hinaus lässt sich in ebenfalls einfacher und zuverlässiger Weise bei einer entsprechenden Ausbildung der Auswerteeinheit ermöglichen, dass eine Durchflussmenge des durch die Ausbringleitung transportierten Heizmaterials aus einer Differenz zwischen einem durch den wenigstens einen Sensor ermittelten Messwert und einem Soll-Messwert detektiert wird, welcher bei einem Durchtritt von lediglich dem Saugmedium durch die Ausbringleitung festgestellt wird, wie dies einer weiters bevorzugten Ausführungsform des erfindungsgemäßen Verfahrens entspricht.

Durch das erfindungsgemäße Verfahren lässt sich somit eine im Wesentlichen automatisierte Überwachung eines zuverlässigen Transports eines festen rieselfähigen Heizmaterials zwischen einem Vorratsbehälter bzw. Vorratsraum und einer Heizvorrichtung bzw. einem dieser Heizvorrichtung unmittelbar vorgeschalteten Zwischenbehälter im Wesentlichen unabhängig von der jeweiligen Ausbildung der einzelnen Komponenten der Heizanlage sicherstellen.

Insbesondere bei Vorratsbehältern großen Volumens bzw. großer Kapazität ist es darüber hinaus bekannt, dass üblicherweise an unterschiedlichen Orten bzw. Stellen im Inneren des Vorratsbehälters eine Mehrzahl von Entnahmevorrichtungen angeordnet ist, welche beispielsweise eine im Wesentlichen gleichmäßige Entleerung des entsprechend größere Abmessungen aufweisenden Vorratsbehälters sicherstellen. Hierbei wird üblicherweise die Ausbringleitung von jeweils einer Entnahmevorrichtung gespeist, wobei entsprechende Umschalteinrichtungen zwischen einzelnen Entnahmevorrichtungen, wie beispielsweise Aufnahmeöffnungen und daran anschließende Anschlussleitungen und der Ausbringleitung vorgesehen und bekannt sind. Ein Umschalten kann für ein im Wesentlichen gleichmäßiges Entleeren des Vorratsbehälters beispielsweise zeitlich gesteuert vorgesehen sein.

Im Zusammenhang mit der erfindungsgemäß vorgeschlagenen Möglichkeit einer Überwachung eines zuverlässigen Transports von festem rieselfähigem Heizmaterial wird insbesondere bei Vorliegen derartiger mehrfacher Entnahmevorrichtungen und einer entsprechenden Umschalteinrichtung darüber hinaus gemäß einer weiters bevorzugten Ausführungsform vorgeschlagen, dass in Abhängigkeit von dem festgestellten Durchfluss und/oder der festgestellten Durchflussmenge des transportierten Heizmaterials eine Umschaltung zwischen einer Mehrzahl von Entnahmevorrichtungen im Vorratsbehälter für ein Einbringen des zu transportierenden Heizmaterials in die Ausbringleitung vorgenommen wird. Derart wird es erfindungsgemäß möglich, beispielsweise bei einer Blockade einer Entnahmevorrichtung und einer derart erfindungsgemäß vorgesehenen Feststellung eines nicht bzw. nur unzureichend vorhandenen Durchflusses oder einer zu geringen Durchflussmenge unmittelbar über die Umschaltvorrichtung ein Umschalten zu einer weiteren Entnahmevorrichtung für eine ordnungsgemäße Versorgung der Heizvorrichtung oder eines der Heizvorrichtung vorgeschalteten Zwischenbehälters zur Verfügung zu stellen.

Zur Lösung der eingangs genannten Aufgaben ist darüber hinaus eine Vorrichtung der oben genannten Art im Wesentlichen dadurch gekennzeichnet, dass ein elektrischer Sensor durch wenigstens eine an der Innenseite der Ausbringleitung angeordnete Elektrode zur Detektion einer elektrostatischen Aufladung des transportierten, von Holzschnitzel oder Pellets gebildeten Heizmaterials während des Transports durch die Ausbringleitung durch einen Aufprall des Heizmaterials auf die aus einem Kunststoff hergestellte, innere Oberfläche der Ausbringleitung gebildet ist, wobei die Elektrode mit wenigstens einer Diode zur Auswertung der Spannung, insbesondere des spannungsabhängigen Werts der Sperrschichtkapazität der wenigstens einen Diode gekoppelt ist. Erfindungsgemäß lässt sich eine besonders zuverlässige Auswertung des Durchflusses oder der Durchflussmenge des zu transportierenden, von Holzschnitzel oder Pellets gebildeten Heizmaterials durch eine Überwachung der elektrostatischen Aufladung des zu transportierenden Heizmaterials erzielen. Wie bereits oben erwähnt, gelingt somit eine einfache und zuverlässige Detektion bzw. Feststellung des Durchflusses oder der Durchflussmenge des zu transportierenden Heizmaterials unmittelbar an der Ausbringleitung, so dass eine zuverlässige Versorgung der Heizvorrichtung bzw. des vorgeschalteten Zwischenbehälters sichergestellt werden kann.

Bei Vorsehen mehrerer Entnahmevorrichtungen ist darüber hinaus für die erfindungsgemäße Vorrichtung gemäß einer weiters bevorzugten Ausführungsform vorgeschlagen, dass zusätzlich eine Umschaltvorrichtung für ein Umschalten zwischen mehreren Entnahmevorrichtungen im Vorratsbehälter vorgesehen ist, wobei die Umschaltvorrichtung durch die Auswerteeinrichtung geregelt bzw. gesteuert ist.

Die Erfindung wird nachfolgend anhand von in der beiliegenden Zeichnung schematisch dargestellten Ausführungsbeispielen näher erläutert. In dieser zeigen:
FIG. 1 eine schematische Darstellung einer erfindungsgemäßen Vorrichtung zur Durchführung des erfindungsgemäßen Verfahrens zum Überwachen des Transports von festem rieselfähigem Heizmaterial;
FIG. 2 bis 5 in jeweils vergrößerter Darstellung unterschiedliche Ausbildungen von Sensoren bei einem Einsatz in einer erfindungsgemäßen Vorrichtung zur Durchführung des erfindungsgemäßen Verfahrens, wobei die Ausbildungen gemäß Fig. 2 bis 4 nicht durch die Erfindung umfasst sind; und
FIG. 6 ein schematisches Schaltbild der in FIG. 5 dargestellten, erfindungsgemäßen Sensoranordnung unter Ermittlung des Durchflusses und/oder der Durchflussmenge des zu transportierenden Heizmaterials unter Heranziehung einer elektrostatischen Aufladung des transportierten Heizmaterials.

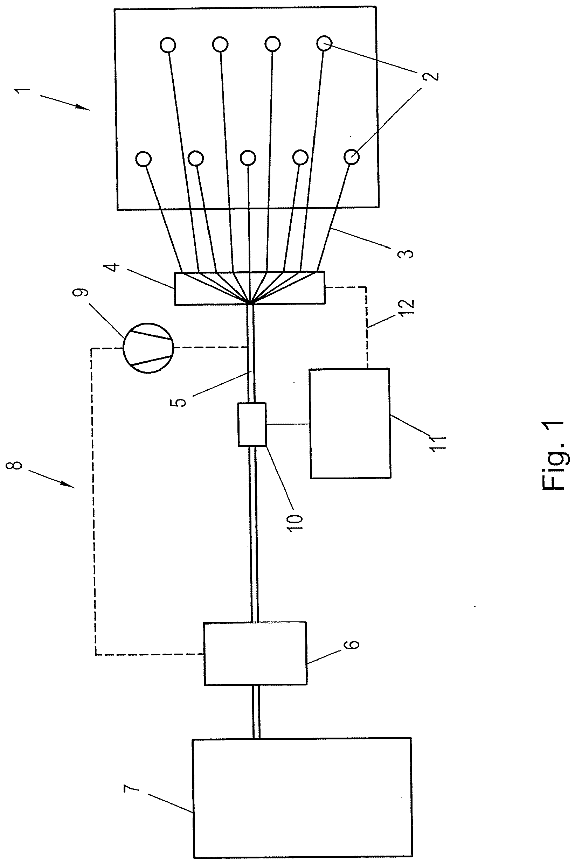

In FIG. 1 ist schematisch mit 1 ein Vorratsbehälter einer allgemein dargestellten Heizanlage bezeichnet, wobei in dem Vorratsbehälter 1, welcher üblicherweise ein entsprechend großes Volumen aufweist, eine große Menge an nicht näher dargestelltem festem rieselfähigem Heizmaterial, wie beispielsweise Holzschnitzel oder Pellets gelagert wird.

Im Inneren des Vorratsbehälters 1 ist eine Mehrzahl von Entnahmevorrichtungen 2 angedeutet, welche von entsprechenden Aufnahmeöffnungen für das in dem Vorratsbehälter 1 enthaltene Heizmaterial gebildet sind, wobei diese Entnahmevorrichtungen 2 jeweils über schematisch mit 3 angedeutete Leitungen mit einer mit 4 bezeichneten Umschaltvorrichtung verbunden sind. In dieser für sich gesehen bekannten Umschaltvorrichtung 4 wird jeweils eine Auswahl dahingehend vorgenommen, über welche der Entnahmevorrichtungen 2 das Material aus dem Vorratsbehälter 1 entnommen wird. Derart gelangt das über jeweils eine Entnahmevorrichtung 2 entnommene Heizmaterial in eine Ausbringleitung 5, in welcher unter Zufuhr eines Saugmediums, wie beispielsweise Luft, das zu transportierende Heizmaterial aus dem Vorratsbehälter 1 in einen Zwischenbehälter 6 transportiert wird. Dieser Zwischenbehälter 6 ist unmittelbar vor der nachgeschalteten und mit 7 bezeichneten Heizvorrichtung angeordnet, wobei in dieser Heizvorrichtung das im Vorratsbehälter 1 enthaltene feste rieselfähige Heizmaterial zur Energiegewinnung, beispielsweise zur Erzeugung von Warmwasser für Heiz- und/oder Waschzwecke herangezogen wird.

Der Kreislauf für das Saugmedium ist allgemein mit 8 bezeichnet, wobei ein entsprechendes Gebläse mit 9 angedeutet ist.

In bzw. an der Ausbringleitung bzw. Saugleitung 5 ist ein mit 10 bezeichneter Sensor vorgesehen, welcher zur Überwachung des Transports und insbesondere des Durchflusses und/oder der Durchflussmenge des in der Ausbringleitung 5 transportierten Heizmaterials dient, wie dies unter Bezugnahme auf die nachfolgenden Figuren im Detail erörtert werden wird.

Dieser Sensor 10 ist mit einer mit 11 bezeichneten Auswerteeinrichtung gekoppelt, in welcher unter Einsatz entsprechender, an sich bekannter und nicht näher im Detail erörterter Auswerteelemente eine Feststellung des Durchflusses und/oder der Durchflussmenge des transportierten Heizmaterials erfolgt.

Sollte beispielsweise im Rahmen der Überwachung und insbesondere in der Auswerteeinrichtung 11 festgestellt werden, dass kein bzw. ein nicht ausreichender Durchfluss des zu transportierenden Heizmaterials vorliegt und/oder eine vorgegebene Durchflussmenge beispielsweise durch ein Blockieren einer Entnahmevorrichtung 2 nicht erreicht wird, so kann durch die schematisch mit 12 angedeutete Kopplung zwischen der Auswerteeinrichtung und der Umschalteinrichtung 4 unmittelbar eine Umschaltung zu einer anderen Entnahmevorrichtung 2 durchgeführt werden.

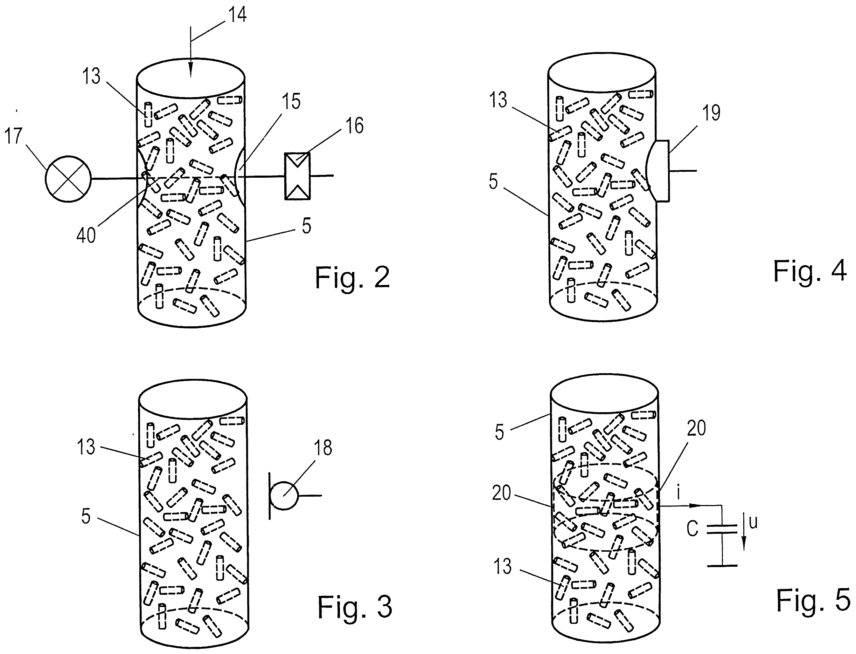

In FIG. 2 bis 5 sind unterschiedliche Ausbildungen von Sensoren gezeigt, wobei in diesen schematischen und in größerem Maßstab dargestellten Figuren jeweils der Teilbereich der Ausbringleitung 5 gezeigt ist, in bzw. an welchem ein Sensor vorgesehen ist. Darüber hinaus ist in FIG. 2 bis 5 schematisch der Durchtritt bzw. Durchfluss von festem rieselfähigem Heizmaterial angedeutet, welches durch das Bezugszeichen 13 bezeichnet ist. Eine Durchtrittsrichtung des Heizmaterials 13 durch die Ausbringleitung 5 ist durch einen Pfeil 14 angedeutet.

Bei der Darstellung gemäß FIG. 2, welche nicht durch die Erfindung umfasst ist, ist vorgesehen, dass die Ausbringleitung 5 einen mit 15 bezeichneten transparenten Teilbereich aufweist, so dass der Sensor von einem Sender bzw. Emitter 16 für Licht und einem Detektor 17 gebildet ist. Entsprechend dem Durchfluss bzw. Durchtritt des zu transportierenden Heizmaterials 13 erfolgt eine Verminderung der Intensität des durch den transparenten Teilbereich 15 der Ausbringleitung 5 hindurchtretenden Lichtstrahls bzw. Lichtschrankens 40, so dass aus einer detektierten Änderung der Intensität unmittelbar die Feststellung eines erfolgenden Durchflusses des zu transportierenden Heizmaterials 13 und aus einer entsprechenden Intensitätsänderung auch die Durchflussmenge des Heizmaterials 13 bestimmt werden kann.

Bei der abgewandelten Ausführungsform gemäß FIG. 3, welche nicht durch die Erfindung umfasst ist, erfolgt eine Feststellung eines Transports bzw. Durchflusses des zu transportierenden Heizmaterials 13 durch Vorsehen eines Mikrofons 18 außerhalb der wiederum mit 5 bezeichneten Ausbring- bzw. Saugleitung. In diesem System wird über den von dem Mikrofon 18 gebildeten Sensor ein Transportgeräusch im Saugmedium bzw. Luftstrom detektiert, wobei ein Unterschied bzw. eine Änderung in diesem Transportgeräusch für eine Detektion eines ordnungsgemäßen Transports von zu transportierendem Heizmaterial 13 herangezogen wird. Gegebenenfalls störende Umweltgeräusche können über geeignete Signalbe- bzw. -verarbeitungsverfahren gefiltert werden.

Bei einer weiteren abgewandelten Ausführungsform gemäß FIG. 4, welche nicht durch die Erfindung umfasst ist, ist an der Außenseite der Ausbringleitung 5 ein Körperschallaufnehmer 19 als Sensor angeordnet, wobei über einen derartigen Körperschallsensor 19 ein Auftreffen bzw. Aufprall von in der Ausbringleitung 5 transportiertem Heizmaterial 13 festgestellt wird. Derart lässt sich wiederum eine Detektion eines Durchflusses von zu transportierendem Heizmaterial 13 und aus der Intensität der aufgenommenen Signale eine Auswertung betreffend die Durchflussmenge des zu transportierenden Heizmaterials 13 durchführen.

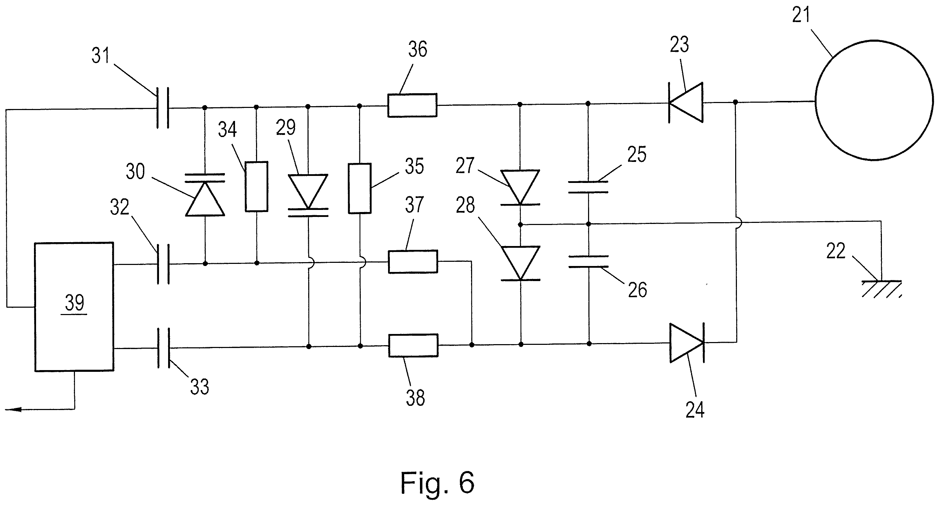

Bei der erfindungsgemäßen Ausführungsform gemäß FIG. 5 wird berücksichtigt, dass es bei einem Transport von Heizmaterial 13 durch eine aus Kunststoff ausgebildete Ausbringleitung 5 durch einen Aufprall des zu transportierenden, von Holzschnitzel oder Pellets gebildeten Heizmaterials 13 auf die Innenwand zu einer elektrostatischen Aufladung des Heizmaterials 13 kommt. Als Sensor werden im Inneren der Ausbringleitung leitende Flächen 20 vorgesehen, wobei bei einem Auftreffen des elektrostatisch aufgeladenen Heizmaterials 13 auf diese leitenden Flächen 20 eine Abgabe von Ladungen auf diese leitenden Flächen bzw. Elektroden 20 erfolgt. In weiterer Folge wird die Oberflächenladung dieser leitenden Flächen 20 abgeführt und mit geeigneten Messverfahren detektiert bzw. ausgewertet, wie dies im Detail in FIG. 6 dargestellt ist.

Bei der Darstellung gemäß FIG. 6 ist eine an der Innenfläche der Ausbringleitung 5, welche in FIG. 6 nicht näher dargestellt ist, vorgesehene leitende Fläche bzw. Elektrode mit 21 bezeichnet, welche sich im Wesentlichen an einer beliebigen Stelle der Innenwand der Ausbringleitung 5 befindet. Als Referenzpotenzial bzw. zweite leitende Fläche, wie dies in FIG. 5 angedeutet ist, dient das Massepotenzial 22 der Ausbringleitung 5 bzw. des Transportsystems.

Die Ladungen an der Oberfläche des transportierten Materials 13, wie Holzpellets oder Hackschnitzel werden an die Elektrode 21 bei Berührung abgegeben und je nach Polarität laden diese Ladungen über Dioden 23 oder 24 Kondensatoren 25 und 26 auf. Die Spannung an den Kondensatoren 25, 26 wird mit den Dioden 27, 28 auf den Wert von deren Durchlassspannung begrenzt. Bei Wegfall dieser Spannungsbegrenzung kann aus dem Wert der Spannung an den Kondensatoren 25, 26 auf die Menge des transportierten Materials 13 rückgeschlossen werden. Widerstände 35 bis 38 bilden für die Kondensatoren 25, 26 eine kontrollierte Entladung und einen Spannungsteiler für in Durchlass- und Sperrrichtung geschaltete weitere Dioden 29, 30. Hier wird nicht der gleichrichtende Effekt der Dioden 29, 30 genutzt, sondern der spannungsabhängige Wert der Sperrschichtkapazität, der sich nicht nur in Sperrrichtung mit steigender Spannung verringert, sondern sich auch bei Anlegen einer Spannung in Durchlassrichtung bis zum leitend werden der Diode erhöht. Durch die Wahl der Spannungsteiler bzw. Widerstände 35 bis 38 und/oder der Verwendung von mehreren, in gleicher Richtung hintereinandergeschalteter Dioden als Teile 29 bzw. 30 wird verhindert, dass die Durchlassspannung der Diode(n) 29, 30 erreicht wird.

Die aus der Elektrode 21 gewonnene Spannung wird dann als Kapazitätsdifferenz ausgewertet, wobei die Differenz auch erhalten bleibt, wenn weitere Kondensatoren 31 bis 33 im Signalpfad liegen. In einer Elektronik bzw. Auswerteeinheit 39 wird dann diese Kapazitätsdifferenz ausgewertet und liefert dann entweder nur die Information, dass ein Materialtransport stattfindet, oder auch ein Signal proportional zur geförderten Menge des Heizmaterials 13 je Zeiteinheit.

Wesentlich ist, dass die Entladungen des zu transportierenden Heizmaterials 13 getrennt nach Polarität gespeichert werden, wobei als Auswerteverfahren dieser geringen Energien die Veränderung der Sperrschichtkapazität der Dioden 29, 30 im Bereich unter dem Wert der Durchlassspannung in Durchlass- und Sperrrichtung dient und damit die Differenz der Spannungen aus den in Kondensatoren gespeicherten Ladungen sowohl Dioden 29, 30 in Durchlass als auch in Sperrrichtung angeboten wird, um als Kapazitätsdifferenz ausgewertet zu werden, wobei diese Differenz auch erhalten bleibt, wenn bei der Messung der Kapazitätsdifferenz weitere Kondensatoren 31 bis 33 in Serie liegen, um die Messung auch bei beweglichen Elektroden zu ermöglichen.

Insgesamt gelingt somit eine einfache und zuverlässige Überwachung des Transports von transportierendem festem rieselfähigem Heizmaterial 13 zwischen einem Vorratsbehälter 1 zu einer Heizvorrichtung 7 bzw. einem vorgeschalteten Zwischenbehälter über eine Ausbringleitung 5, so dass die Automatisierung einer derartigen gesamten Heizanlage weiter verbessert bzw. unterstützt werden kann. Insbesondere kann unabhängig von gegebenenfalls unterschiedlichen Herstellern des Vorratsbehälters 1 sowie der Entnahmevorrichtungen 2 und der Heizvorrichtung 7 durch die vorgeschlagene Zwischenschaltung wenigstens eines Sensors 10 in der Ausbringleitung eine entsprechend zuverlässige Bereitstellung des Heizmaterials bei der Heizvorrichtung 7 bzw. dem vorgeschalteten Zwischenbehälter 6 sichergestellt werden.

Hierbei ist unmittelbar einsichtig, dass eine derartige Überwachung des Transports von Heizmaterial 13 zwischen einem Vorratsbehälter 1 und einer Heizvorrichtung 7 auch bei Vorsehen lediglich einer Entnahmevorrichtung 2 und unter Verzicht auf eine Umschaltvorrichtung 4 bei Vorsehen einer gegebenenfalls vereinfachten Auswerteeinheit 11 die angestrebte Automatisierung einer Heizanlage unterstützt.

## Patentansprüche

1. Verfahren zum Überwachen des Transports von festem rieselfähigem Heizmaterial (13), wie beispielsweise Holzschnitzel oder Pellets, wobei das Heizmaterial (13) aus einem Vorratsbehälter (1) über wenigstens eine Entnahmevorrichtung (2) in eine Ausbringleitung (5), insbesondere Saugleitung, eingebracht und zu einer Heizvorrichtung (7) bzw. einem Zwischenbehälter (6) der Heizvorrichtung (7) transportiert wird, wobei in der Ausbringleitung (5) über wenigstens einen Sensor (10, 20, 21, 22) der Durchfluss und/oder die Durchflussmenge des transportierten Heizmaterials (13) detektiert wird bzw. werden, **dadurch gekennzeichnet, dass** eine elektrostatische Aufladung des transportierten, von Holzschnitzel oder Pellets gebildeten Heinzmaterials (13) während des Transports durch die Ausbringleitung (5) durch einen Aufprall des Heizmaterials auf die aus einem Kunststoff hergestellte, innere Oberfläche der Ausbringleitung (5) durch eine Detektion einer Entladung des aufgeladenen transportierten Heizmaterials (13) an einem durch leitende Flächen (20, 21, 22) an der Innenseite der Ausbringleitung (5) gebildeten Sensor festgestellt wird.

2. Verfahren nach Anspruch 1, **dadurch gekennzeichnet, dass** durch das elektrostatisch aufgeladene transportierte Heizmaterial (13) bei einem Auftreffen auf die Oberfläche der Elektrode (20, 21, 22) abgegebene Ladungen über wenigstens eine mit dem Sensor gekoppelte Diode (23, 24, 29) abgeleitet werden und die Spannung der Diode (23, 24, 29) zur Feststellung des Durchflusses und/oder einer Durchflussmenge des transportierten Heizmaterials (13) in einer nachgeschalteten Auswerteeinrichtung (11, 39) ausgewertet wird.

3. Verfahren nach Anspruch 2, **dadurch gekennzeichnet, dass** zur Auswertung des Durchflusses oder der Durchflussmenge des transportierten Heizmaterials der spannungsabhängige Wert der Sperrschichtkapazität der wenigstens einen Diode (29, 30) ausgewertet wird.

4. Verfahren nach einem der Ansprüche 1 bis 3, **dadurch gekennzeichnet, dass** ein Durchfluss des transportierten Heizmaterials (13) durch die Ausbringleitung (5) durch Feststellung einer Änderung eines durch den wenigstens einen Sensor (10, 20, 21, 22) festgestellten Messwerts gegenüber einem Soll-Messwert detektiert wird, welcher bei einem Durchtritt von lediglich einem Saugmedium durch die Ausbringleitung (5) festgestellt wird.

5. Verfahren nach einem der Ansprüche 1 bis 4, **dadurch gekennzeichnet, dass** eine Durchflussmenge des durch die Ausbringleitung transportierten Heizmaterials (13) aus einer Differenz zwischen einem durch den wenigstens einen Sensor (10, 20, 21, 22) ermittelten Messwert und einem Soll-Messwert detektiert wird, welcher bei einem Durchtritt von lediglich dem Saugmedium durch die Ausbringleitung (5) festgestellt wird.

6. Verfahren nach einem der Ansprüche 1 bis 5, **dadurch gekennzeichnet, dass** in Abhängigkeit von dem festgestellten Durchfluss und/oder der festgestellten Durchflussmenge des transportierten Heizmaterials (13) eine Umschaltung zwischen einer Mehrzahl von Entnahmevorrichtungen (2) im Vorratsbehälter (1) für ein Einbringen des zu transportierenden Heizmaterials (13) in die Ausbringleitung (5) vorgenommen wird.

7. Vorrichtung zum Überwachen des Transports von festem rieselfähigem Heizmaterial (13), wie beispielsweise Holzschnitzel oder Pellets, mit einem Vorratsbehälter (1) für das Heizmaterial, wenigstens einer Entnahmevorrichtung (2) zur Entnahme des zu transportierenden Heizmaterials (13) aus dem Vorratsbehälter (1) und einer Ausbringleitung (5), insbesondere Saugleitung, zum Transport des Heizmaterials (13) von dem Vorratsbehälter (1) zu einer Heizvorrichtung (7) bzw. einem Zwischenbehälter (6) der Heizvorrichtung (7), wobei in bzw. an der Ausbringleitung (5) wenigstens ein Sensor (10, 20, 21, 22) angeordnet ist und dass der Sensor (10, 20, 21, 22) für eine Detektion des Durchflusses und/oder der Durchflussmenge des transportierten Heizmaterials mit einer Auswerteeinrichtung (11, 39) gekoppelt ist, **dadurch gekennzeichnet, dass** ein elektrischer Sensor durch wenigstens eine an der Innenseite der Ausbringleitung angeordnete Elektrode (20, 21, 22) zur Detektion einer elektrostatischen Aufladung des transportierten, von Holzschnitzel oder Pellets gebildeten Heizmaterials (13) während des Transports durch die Ausbringleitung (5) durch einen Aufprall des Heizmaterials auf die aus einem Kunststoff hergestellte, innere Oberfläche der Ausbringleitung (5) gebildet ist, wobei die Elektrode (20, 21, 22) mit wenigstens einer Diode (23, 24, 29) zur Auswertung der Spannung, insbesondere des spannungsabhängigen Werts der Sperrschichtkapazität der wenigstens einen Diode (29, 30) gekoppelt ist.

8. Vorrichtung nach Anspruch 7, **dadurch gekennzeichnet, dass** zusätzlich eine Umschaltvorrichtung (4) für ein Umschalten zwischen mehreren Entnahmevorrichtungen (2) im Vorratsbehälter (1) vorgesehen ist, wobei die Umschaltvorrichtung (4) durch die Auswerteeinrichtung (11) geregelt bzw. gesteuert ist.

## Claims

1. A method for monitoring the transport of solid pourable heating material (13), such as wood chips or pellets, wherein the heating material (13) is introduced into an delivery pipe (5), in particular a suction pipe, from a storage container (1) via at least one withdrawal device (2) and transported to a heating device (7), or an intermediate container (6) of the heating device (7), wherein the flow rate of the transported heating material (13) is detected in the delivery pipe (5) by at least one sensor (10, 20, 21, 22), **characterized in that** an electrostatic charge of the transported heating material (13) comprised of wood chips or pellets is determined during its transport through the delivery pipe (5) by the heating material impinging on the inner surface of the delivery pipe (5), which is made of a synthetic material, by detecting a discharge of the charged transported heating material (13) on a sensor formed by conducting surfaces (20, 21, 22) on the inner side of the delivery pipe (5).

2. A method according to claim 1, **characterized in that** charges released by the electrostatically charged, transported heating material (13) when impinging on the surface of the electrode (20, 21, 22) are dissipated via at least one diode (23, 24, 29) coupled to the sensor, and the voltage of the diode (23, 24, 29) is evaluated in a consecutively arranged evaluation device (11, 39) for determining the flow rate of the transported heating material (13).

3. A method according to claim 2, **characterized in that** the voltage-dependent value of the barrier layer capacitance of the at least one diode (29, 30) is evaluated to evaluate the flow rate of the transported heating material.

4. A method according to any one of claims 1 to 3, **characterized in that** a flow rate of the transported heating material (13) through the delivery pipe (5) is detected by determining a change of a measurement value detected by the at least one sensor (10, 20, 21, 22) relative to a set measurement value determined upon passage of only a suction medium through the delivery pipe (5).

5. A method according to any one of claims 1 to 4, **characterized in that** a flow rate of the heating material (13) transported through the delivery pipe is determined from a difference between a measurement value detected by the at least one sensor (10, 20, 21, 22) and a set measurement value determined upon passage of only the suction medium through the delivery pipe (5).

6. A method according to any one of claims 1 to 5, **characterized in that**, as a function of the determined flow rate of the transported heating material (13), switching among a plurality of withdrawal devices (2) in the storage container (1) is performed for introducing into the delivery pipe (5) the heating material (13) to be transported.

7. A device for monitoring the transport of solid pourable heating material (13), such as wood chips or pellets, including a storage container (1) for the heating material, at least one withdrawal device (2) for withdrawing from the storage container (1) the heating material (13) to be transported, and an delivery pipe (5), in particular a suction pipe, for transporting the heating material (13) from the storage container (1) to a heating device (7), or an intermediate container (6) of the heating device (7), wherein at least one sensor (10, 20, 21, 22) is disposed in or on the delivery pipe (5) and the sensor (10, 20, 21, 22) is coupled to an evaluation device (11, 39) for detecting the flow rate of the transported heating material, **characterized in that** an electric sensor is formed by at least one electrode (20, 21, 22) disposed on the inner side of the delivery pipe for detecting an electrostatic charge of the transported heating material (13) comprised of wood chips or pellets during its transport through the delivery pipe (5) by the heating material impinging on the inner surface of the delivery pipe (5), which is made of a synthetic material, wherein the electrode (20, 21, 22) is coupled to at least one diode (23, 24, 29) for evaluating the voltage, in particular the voltage-dependent value of the barrier layer capacitance, of the at least one diode (29, 30).

8. A device according to claim 7, **characterized in that** a switching device (4) is additionally provided for switching among a plurality of withdrawal devices (2) in the storage container (1), said switching device (4) being controlled by the evaluation device (11).

## Revendications

1. Procédé servant à surveiller le transport d'un matériau de chauffage (13) solide pouvant s'écouler, tel que des copeaux de bois ou des granulés, où le matériau de chauffage (13) provenant d'un réservoir de stockage (1) est introduit dans un conduit de distribution (5), en particulier un conduit d'aspiration, par l'intermédiaire au moins d'un dispositif de prélèvement (2) et est transporté vers un dispositif de chauffage (7) ou un réservoir temporaire (6) du dispositif de chauffage (7), où le passage et/ou le débit du matériau de chauffage (13) transporté sont détectés dans le conduit de distribution (5) par l'intermédiaire au moins d'un capteur (10, 20, 21, 22), **caractérisé en ce qu'**une charge électrostatique du matériau de chauffage (13) transporté, formé par des copeaux de bois ou des granulés est relevée au cours du transport à travers le conduit de distribution (5) par un impact du matériau de chauffage sur la surface intérieure, fabriquée à partir d'une matière plastique, du conduit de distribution (5), par une détection d'une décharge du matériau de chauffage (13) transporté chargé, au niveau d'un capteur formé par des surfaces (20, 21, 22) d'acheminement au niveau du côté intérieur du conduit de distribution (5).

2. Procédé selon la revendication 1, **caractérisé en ce que** des charges fournies par le matériau de chauffage (13) transporté chargé de manière électrostatique en rencontrant la surface de l'électrode (20, 21, 22) sont déviées par l'intermédiaire au moins d'une diode (23, 24, 29) couplée au capteur, et **en ce que** la tension de la diode (23, 24, 29) est analysée afin de relever le passage et/ou un débit du matériau de chauffage (13) transporté dans un système d'analyse (11, 39) installé en aval.

3. Procédé selon la revendication 2, **caractérisé en ce que** la valeur dépendant de la tension de la capacité de la couche formant barrière de l'au moins une diode (29, 30) est analysée afin d'analyser le passage ou le débit du matériau de chauffage transporté.

4. Procédé selon l'une quelconque des revendications 1 à 3, **caractérisé en ce qu'**un passage du matériau de chauffage (13) transporté à travers le conduit de distribution (5) est détecté en relevant une modification d'une valeur de mesure relevée par l'au moins un capteur (10, 20, 21, 22) par rapport à une valeur de mesure théorique, laquelle est relevée lors d'une traversée de seulement un milieu d'aspiration à travers le conduit de distribution (5).

5. Procédé selon l'une quelconque des revendications 1 à 4, **caractérisé en ce qu'**un débit du matériau de chauffage (13) transporté à travers le conduit de distribution est détecté à partir d'une différence entre une valeur de mesure déterminée par l'au moins un capteur (10, 20, 21, 22) et une valeur de mesure théorique, qui est relevée lors d'une traversée de seulement le milieu d'aspiration à travers le conduit de distribution (5).

6. Procédé selon l'une quelconque des revendications 1 à 5, **caractérisé en ce qu'**en fonction du passage relevé et/ou du débit relevé du matériau de chauffage (13) transporté, une commutation entre une pluralité de dispositifs de prélèvement (2) dans le réservoir (1) en vue d'une introduction du matériau de chauffage (13) à transporter dans le conduit de distribution (5) est effectuée.

7. Dispositif servant à surveiller le transport du matériau de chauffage (13) solide pouvant s'écouler, tel que des copeaux de bois ou des granulés, comprenant un réservoir (1) pour le matériau de chauffage, au moins un dispositif de prélèvement (2) servant au prélèvement du matériau de chauffage (13) à transporter provenant du réservoir de stockage (1) et d'un conduit de distribution (5), en particulier d'un conduit d'aspiration, servant au transport du matériau de chauffage (13) depuis le réservoir (1) vers un dispositif de chauffage (7) ou un réservoir intermédiaire (6) du dispositif de chauffage (7), où au moins un capteur (10, 20, 21, 22) est disposé dans ou au niveau du conduit de distribution (5), et le capteur (10, 20, 21, 22) est couplé à un système d'analyse (11, 39) en vue d'une détection du passage et/ou du débit du matériau de chauffage transporté, **caractérisé en ce qu'**un capteur électrique est formé par au moins une électrode (20, 21, 22) disposée au niveau du côté intérieur du conduit de distribution, servant à la détection d'une charge électrostatique du matériau de chauffage (13) transporté, formé par des copeaux de bois ou des granulés, au cours du transport à travers le conduit de distribution (5) par un impact du matériau de chauffage sur la surface intérieure, fabriquée à partir d'une matière plastique, du conduit de distribution (5), où l'électrode (20, 21, 22) est couplée à au moins une diode (23, 24, 29) servant à analyser la tension, en particulier la valeur dépendant de la tension de la capacité de couche formant barrière de l'au moins une diode (29, 30).

8. Dispositif selon la revendication 7, **caractérisé en ce qu'**en supplément un dispositif de commutation (4) est prévu en vue d'une commutation entre plusieurs dispositifs de prélèvement (2) dans le réservoir de stockage (1), où le dispositif de commutation (4) est régulé ou commandé par le système d'analyse (11).
